# EUROPEAN PATENT APPLICATION

(11) **EP 1 080 642 A1**
(43) Date of publication of application: **07.03.2001**
(21) Application number: 99202824.1
(22) Date of filing: 31.08.1999
(51) Int. Cl.: A21D 10/00, A21D 13/00, A21D 13/02, A21D 13/04

(54) **Set of improvers for the production of a baked product comprising at least two different types of dough**

(71) Applicant: PURATOS N.V., 1702 Groot-Bijgaarden (BE); Madaro S.P.R.L., 4130 Mery-Esneux (BE)
(72) Inventor: Caluwaerts, Vincent, 1910 Kampenhout (BE); Dejaeghere, Roland, 1150 Woluwé-St.Pierre (BE); Boerboom, Marc, 6941 Tours-Durbuy (BE)
(74) Representative: Van Malderen, Michel

(57) **Abstract**

Set of at least two separately premixed individual improvers for baked products based on cereals, each containing functional ingredients meant to be supplemented mainly with a part of flour, water, salt and yeast, in order to constitute separate dough pieces, characterised in that said improvers are balanced with respect to each other in such a manner that, by mixing individually said improvers mainly with flour, water, salt and yeast, said dough pieces are produced, which, after a common pan-baking process of said dough pieces, form an homogeneous baked product consisting in a bread loaf comprising different types of crumb.

## Description

### Object of the invention

The present patent application relates to the production of a baked product, preferably a type of bread, consisting of at least two and preferably three different dough parts and based on adapted improvers for each part.

The invention more particularly concerns the set of dough improvers necessary to obtain said bread and preferably dedicated to the baker's use.

The invention concerns also the process for obtaining such a special bread and the bread thus obtained.

### State of the art

Within the scope of the present invention the term "bread" is referring to a bakery product generally having the common shape of a round or long loaf and presenting a crumb quality, extending from light white crumb obtained with white wheat flour to dense dark crumb obtained with wholemeal rye flour, with a variety of intermediate mixtures thereof, comprising possibly additives such as sugar, raisins, etc., according to the specific market taste. This kind of bread is intended to be cut into slices. Usually the bread contains a unique type of crumb and thus is obtained from one single dough part.

At home or in a restaurant, consumers sometimes prefer to have the choice between a variety of bread types, in order to accommodate different individual tastes in the family or to accompany specific meals, e.g. rye bread for salty products such as smoked fish or white bread for marmalade. However loaf bread or so-called pan bread is usually sold as composed of one single type of flour.

Producing a bread made of at least two and preferably three dough parts results in the problem of obtaining equal volumes and separated crumbs.

Furthermore, in the case of multiple dough bread, the internal composition must avoid that, due to differential expansion of the different types of dough, the slicing shows exaggerated interpenetration of a first type of bread in the adjacent second type of bread. Thus, not only the outer appearance (crust) but also the inner appearance, as shown upon slicing, must be correct in the eyes of the customer.

Baked bread products are made of the following basic ingredients : flour (mostly wheat or rye flour), water, salt and yeast. The process of baking is subject to a lot of variations due to external factors (fermentation temperature and duration, baking temperature and duration, humidity, handling, ...) and internal factors (quality and proportions of the ingredients).

Variations of the aforementioned factors normally result in non-homogeneous baked products. To obtain a certain regularity and a constant quality in the end product, so-called functional ingredients are added to the dough.

This functionality in bakery products basically pursues two purposes. On the consumer side, it is aimed to adapt the final product characteristics to the demanded quality requirements such as long lasting freshness, suitable shape and volume, pleasant taste, ease of preparation and serving, health benefits, ... On the manufacturing side, the main aim is to ensure a continuous, quick and flexible operation. This functionality can aim at the modification of the dough's properties and/or the properties of the final baked product.

To ensure a homogeneous mixture in the dough functional ingredients are mostly added as one premixed homogeneous product and are known as "improvers". This homogeneous mixture can be presented as a paste, a dry powder or an oil-based liquid. The most commonly used is the powdered formulation, which contains functional ingredients supplemented with a carrier powder and/or a qualified baking flour. The carrier is usually a non-functional inert ingredient and is used to obtain a diluted product. This dilution is important to obtain a stable product, easy to weigh, manipulate and store. The carrier has to be dry in order to maintain the activity of the functional ingredients, and may not show any negative interference with the functional ingredients. The carrier has to have good free flowing characteristics, so that dosages can be carried out easily.

By definition, an improver has to contain at least two different classes of functional ingredients of at least two different classes. For example, a mix of only oxidizers cannot be called an improver. The mixing of one or more oxidizers with an emulsifier (for example DATEM) results in an improver, since it contains functional ingredients of more than one class of active components.

The combination of ingredients of several classes is usually needed to obtain a synergetic effect and/or to optimise the improver for a specific manufacturing process.

A selected list of possible functional ingredients for the improvers may be found hereafter:
- oxidizers, such as azodicarbonamide, bromate, iodate;
- anti-oxidizers, such as ascorbic acid;
- reducers, such as cysteine, cystine, glutathione;
- enzymes, such as amylases, hemicellulases (pentosanases, cellulases, pectinases), lipases, galactomanases, oxidoreductases, glucoseoxidases;
- emulsifiers, such as diacetyl tartaric acid esters of monoglycerides (DATEM), sodium or calcium stearoyl lactylates (SSL, CSL), mono- and diglycerides, polysorbates, lecithin;
- proteins, such as gluten;
- carbohydrates, such as saccharose, glucose, fructose, lactose, dextrine, maltodextrine;
- malt-ingredients, such as active malt flour, toasted malt flour, malt extract;
- starch, such as wheat starch, corn starch, potato starch;
- soy-derived products, such as soy flour, soy proteins, soy grits;
- thickeners and hydrocolloids, such as guarflour, locust bean gum, carboxymethyl cellulose, xanthan, alginates, etc.;
- milk-derived products, such as full fat milk powder, nonfat milk powder, lactoserum, whey powder, casein;
- vegetable and animal fats;
- salts, such as acetates, citrates, carbonates, sulphates, phosphates;
- preservatives, such as sodium di-acetate, calcium propionate, sorbate.

The improver can also comprise, as additional ingredients, some of the usual ingredients of a basic bread recipe, which were not described as functional or active ingredients. Typical examples of these additional and usual ingredients are flour, salt, etc.

In this case, improvers are developed which contain some of these additional ingredients supplemented with an equilibrated set of functional ingredients.

### Description of prior art

Combining different dough pieces to obtain one baked product is a known technology.

US 4 643 084 describes a cookie-making machine, which can apply dough or combinations of dough on a conveyer belt.

In JP 62 022 539 bread dough is surrounded with a Danish pastry like dough which results in a bread with common constitution and a pastry like crust.

In JP 01 191 637 pieces of ordinary bread and thin sheets of bread containing spices or pieces of fruits are accumulated.

In JP 63 069 039 a cylindrical biscuit with multilayered composition is made by rolling laminate of dough sheets having higher water content in intermediate layers.

In all these applications the difference in dough composition did not give rise to unacceptable quality or adverse effects.

In JP 6 017 225 the production of double-layered doughnuts is described. Two dough pieces with a different composition are combined. It is mentioned that the inner layer becomes visible after breaking of the outer layer. This implies a different expansion of the two dough pieces. In this case it is considered as an advantageous effect.

DE 2 807 532 describes the production of a two layered bread. It solves the problem of having to combine slices of different types of bread in one package by producing one bread that contains both bread types in one slice. To avoid penetration of the two horizontally combined dough pieces, the dough at the bottom of the bread pan has a higher density than the one on top. The example mentions the use of dough pieces of different weights, i.e. 325 g on top and 500 g at the bottom, that are combined to obtain the end product: a loaf consisting of two horizontal layers of different types of bread. DE 2 807 532 also claims the production of a bread with two sheets. Each sheet makes up 50% of the bread volume. As shown in the example this is obtained by varying the weight of the dough pieces.

Optimising a bread or dough composition to obtain a technological effect is used often in the bakery field. US 4 857 353 claims the use of a combination of commonly known bakery ingredients to produce a layer cake by microwave heating instead of a conventional baking oven.

### Aims of the invention

The main aim of the invention is to provide the craft as well as the industrial baker with a set of improvers allowing to guarantee the obtention of an end product with the right shape and inner/external appearance.

Particularly it is an object of the present invention to provide the customer with a bread offering at least two types of crumb, in an homogeneous manner, each crumb part making up the same volume in the bread and with acceptable interpenetration of the crumbs.

### Summary of the invention

The present invention relates to a set of at least two separately premixed individual improvers for baked products based on cereals, each containing functional ingredients meant to be supplemented mainly with a part of flour, water, salt and yeast, in order to constitute separate dough pieces, characterised in that said improvers are balanced with respect to each other in such a manner that, by mixing individually said improvers mainly with flour, water, salt and yeast, said dough pieces are produced, which, after a common pan-baking process, form an homogeneous baked product consisting in a bread loaf comprising different types of crumb.

Preferably, the set comprises three separately premixed improvers.

The improvers include all the necessary ingredients to produce a loaf comprising at least a part of white bread and a part of dark bread (or rye-bread) when added to white flour. Preferably at least one of the improvers is based on white wheat flour.

According to the present invention, the individual dough pieces obtained after mixing of each individual improver mainly with flour, water, salt and yeast, after reshaping and before baking, have approximately equal weight.

Advantageously the weight of each individual dough piece is comprised between 200 and 400 grams.

The invention concerns also the process for producing a baked product comprising the steps of separately mixing the individual improvers of the aforementioned set, with an appropriate quantity of mainly flour, water, salt and yeast, in order to get individual dough pieces, subjecting said individual dough pieces to a bulk fermentation, dividing the dough into equal dough pieces of about 200-400 grams, preferably giving the dough pieces an intermediate proof of approximately 10 minutes, reshaping and rounding the pieces of dough in a longitudinal form and positioning these separately and side-by-side in a pan at substantially equal distances from each other, preferably perpendicularly to the pan longitudinal axe and performing a final fermentation in a fermentation cell at approximately 25 - 30°C with 90 - 95% R.H., possibly spreading flour on the top of the loaves after which the fully fermented loaves are baked. [0034] Advantageously, individual dough pieces are subjected to an intermediate deep-freezing conservation followed by a defrosting process prior to said reshaping and rounding step.

The invention relates at last to a bread obtained by the aforementioned process, comprising at least two different types of crumb in a single loaf which are positioned adjacent to each other in a non-superimposed manner.

The composition of the improvers as detailed in the examples hereafter guarantees that the final bread shows limited interpenetration between two adjacent crumbs. This interpenetration is reduced to a maximum of 2 cm or about 3 slices. However usually the interpenetration is lower.

### Short description of the drawings

Figure 1 represents a front view of a bread according to the present invention.

Figure 2 represents a side view of the bread according to Figure 1.

Figure 3 represents a top view of the bread according to Figure 1.

In these views dimensions are indicated as an illustration of the invention for a bread obtained in pan-baking from three dough pieces of approximately 300 g each.

### Detailed description of the invention

The main drawback encountered in a pan-bread consisting of qualitatively different dough parts, of the same weight, is the volume difference between each type of dough.

Another encountered problem is the mixed crumb at the intersections of the qualitatively different dough-parts, which is due to the difference in consistency and strength of the dough pieces. As the slice thickness in the manual and automatic slicing machines is usually comprised between 3 and 10 mm, the crumb interpenetration is usually unacceptable, i.e. extending over 4 or 5 slices, or even more.

The invention is intended to provide a solution of these problems based on the following two criteria:
1. The composition of the dough improver has to be precisely adapted for each different type of dough, as we want to start from dough pieces of the same weight.
2. Each improver has to be used in a well-defined process where strict conditions and operations during production of this type of bread have to be fulfilled in order to obtain the aforementioned result.

The present invention will be further described by the following examples. These examples limit by no means the scope of the present invention.

### Example 1

The first example of the invention describes a set of three balanced improvers, each said improver containing functional ingredients, supplemented with salt and a part of flour, and identified hereafter as ***Easy TRIO Blanc, Easy TRIO Brun*** and ***Easy TRIO Multi***. These improvers are used in the so called ***"Trio-bread"***, which consists of three different dough pieces.

The composition of the bread is as follows:

| ***Dough 1 : White bread dough*** | |
|---|---|
| ***Ingredients*** | ***Units (kg)*** |
| Wheat flour | 5 |
| *Easy TRIO Blanc* (*) | 5 |
| Water | +/- 5.5 - 5.8 |
| Fresh compressed yeast | 0.2 |

| ***Dough 2 : Grey bread dough*** | |
|---|---|
| ***Ingredients*** | ***Units (kg)*** |
| Wheat flour | 5 |
| *Easy TRIO Brun* (*) | 5 |
| Water | +/- 5 |
| Fresh compressed yeast | 0.3 |

| ***Dough 3 : Dark bread dough*** | |
|---|---|
| ***Ingredients*** | ***Units (kg)*** |
| Wheat flour | 5 |
| *Easy TRIO Multi* (*) | 5 |
| Water | +/- 5.5 - 5.8 |
| Fresh compressed yeast | 0.3 - 0.4 |

| | |
|---|---|
| (*) improver with salt (Composition: see below) | |

### Example 2

The second example is a variant of the first with the following bread types: white, so-called *cramique* (bread with raisins) with improver identified as ***Easy Trio Cramique*** and sugar-bread with improver identified as ***Easy*** ***Trio Sucré.***

| ***Dough 1 : White bread dough*** | |
|---|---|
| ***Ingredients*** | ***Units (kg)*** |
| Wheat flour | 5 |
| *Easy TRIO Blanc* (*) | 5 |
| Water | +/- 5 |
| Fresh compressed yeast | 0.2 |

| ***Dough 2 : "Cramique" bread dough*** | |
|---|---|
| ***Ingredients*** | ***Units (kg)*** |
| Wheat flour | 5 |
| *Easy TRIO Cramique* (*) | 5 |
| Raisins | 4 to 5 |
| Water | +/- 5 |
| Fresh compressed yeast | 0.6 |

| ***Dough 3 : Sugared bread dough*** | |
|---|---|
| ***Ingredients*** | ***Units (kg)*** |
| Wheat flour | 5 |
| *Easy TRIO Sucré* (*) | 5 |
| Water | +/- 5 |
| Fresh compressed yeast | 0.6 |

| | |
|---|---|
| (*) improver with salt (Composition: see below) | |

These examples are not restrictive. For example, specific improvers can be designed for the preparation of dough pieces enriched in vitamins or trace elements, bio-bread, bread with chocolate nuggets, etc.

### Description of the process

Mixing: the ingredients are blended during 2 minutes at low speed and mixed during 6 to 8 minutes at high speed in a spiral mixer (e.g. Diosna® SP24F). Other types of mixers can be used with adapted mixing times to obtain the same dough consistency. At the end of the mixing the dough temperature varies between 26°C and 29°C.

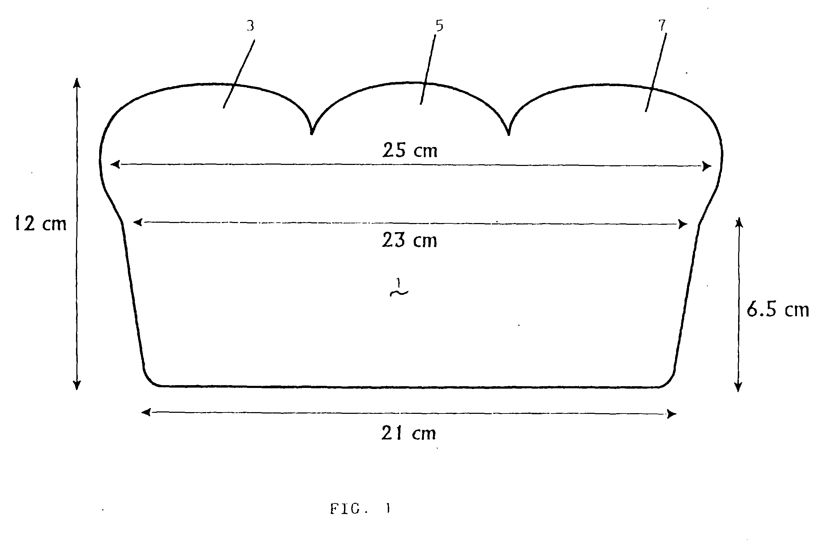

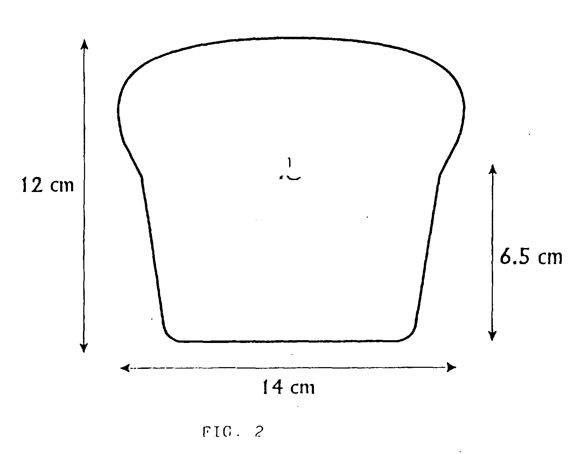

The dough receives a bulk fermentation during 10 to 15 minutes. The dough is divided into equal dough pieces and can be scaled between 200 and 400 grams. The weight of each of the three dough pieces has to be the same. The weight of 300 grams per dough was applied in most of the tests and used therefore as example for the illustrations in the annex (Fig.1 and 2) in a bread of three times 300 grams. These dough pieces are given an intermediate proof of about 10 minutes.

The dough pieces are reshaped and rounded in a longitudinal form. These elongated dough pieces have to be positioned separately in the pan at equal distances from each other and in a perpendicular way referring to the pan. Each pan contains 3 dough pieces, one of each type. The order of the dough pieces can be switched, but the order in the example 1 was from light to dark (or so-called rye bread).

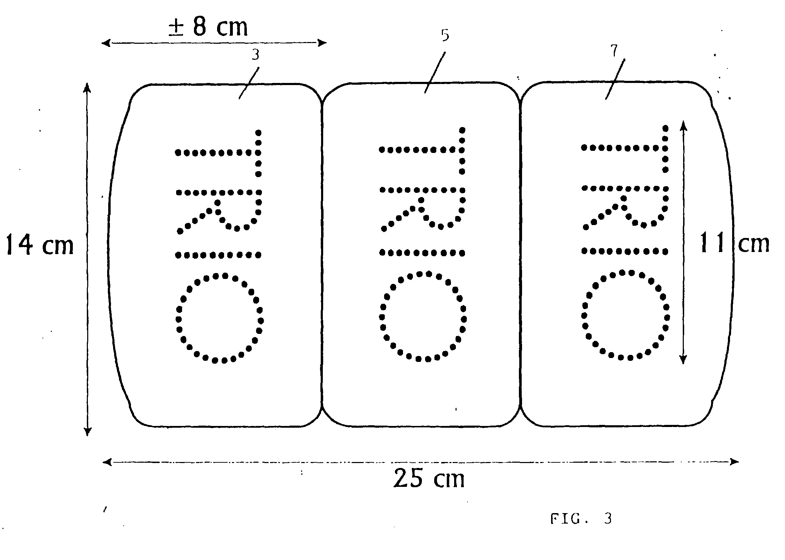

The final fermentation, in the open pans, is carried out in a fermentation cell at 25 - 30°C with 90 - 95% relative humidity (R.H.). A loaf 1 comprising three dough pieces 3, 5, 7 is obtained. It can be marked on the top by a label obtained by perforating it with a tool presenting metal or plastic spikes, after dough reshaping and rounding (for example "Trio", cf. Fig. 3).

Before baking, flour is spread on top of the loaves to obtain a traditional aspect. The fully fermented loaves of 3 x 300 grams are baked at 230°C in a rotary oven during 40 - 45 minutes.

### Description of the improvers

Each improver guarantees equal volumes of each separate part of the bread, as well as clearly distinguished crumbs at the intersection between two different dough pieces, with a maximum of 2 or 3 slides of mixed crumbs (i.e. up to about 2 cm). Dimensions and measures are illustrated in the Figures.

According to the invention, these improvers can be used in a frozen dough concept as well as in a direct process.

### Example of composition of three equilibrated bread improvers

• ***Improver for dough 1 : "Easy TRIO Blanc" :***

| ***Ingredients*** | ***Range (grams)*** | |
|---|---|---|
| | ***Min.*** | ***Max.*** |
| Wheat flour | 47 244 | 46 489 |
| Salt | 1 700 | 2 000 |
| Sugar | 800 | 1 000 |
| SSL | 250 | 500 |
| Ascorbic acid | 5 | 8 |
| Alpha-amylases | 1 | 3 |
| ***Total*** | 50 000 | 50 000 |

• ***Improver for dough 2 : "Easy TRIO Brun" :***

| ***Ingredients*** | ***Range (grams)*** | |
|---|---|---|
| | ***Min.*** | ***Max.*** |
| Plain wheat flour | 45 211 | 42 678 |
| Wheat gluten | 1 750 | 2 500 |
| Salt | 1 700 | 2 000 |
| Sugar | 500 | 800 |
| SSL | 250 | 500 |
| Starch | 200 | 500 |
| Soy oil | 100 | 300 |
| Lactose | 100 | 200 |
| Dextrose | 100 | 200 |
| DATEM | 75 | 300 |
| Ascorbic acid | 8 | 15 |
| Alpha-amylases | 0.5 | 2 |
| Xylanase | 2.5 | 5 |
| ***Total*** | 50 000 | 50 000 |

• ***Improver for dough 3 : "Easy TRIO Multi" :***

| ***Ingredients*** | ***Ranges (grams)*** | |
|---|---|---|
| | ***Min.*** | ***Max.*** |
| Wheat flour | 16 620 | 4 542 |
| Kibbled soy beans | 6 500 | 8 500 |
| Oatflakes | 5 500 | 7 000 |
| Ryeflour | 4 500 | 7 500 |
| Wheatflakes | 5 500 | 7 000 |
| Barley | 3 000 | 5 500 |
| Wheat gluten | 2 600 | 3 000 |
| Fat in powder | 2 500 | 2 800 |
| Salt | 1 700 | 2 000 |
| Malt flour | 1 200 | 1 400 |
| Soy oil | 100 | 150 |
| Lactose | 100 | 150 |
| Dextrose | 100 | 150 |
| DATEM | 75 | 300 |
| Ascorbic acid | 4 | 8 |
| Alpha-amylases | 0.5 | 2 |
| Xylanase | 2.5 | 5 |
| ***Total*** | 50 000 | 50 000 |

## Claims

1. Set of at least two separately premixed individual improvers for baked products based on cereals, each containing functional ingredients meant to be supplemented mainly with a part of flour, water, salt and yeast, in order to constitute separate dough pieces, characterised in that said improvers are balanced with respect to each other in such a manner that, by mixing individually said improvers mainly with flour, water, salt and yeast, said dough pieces are produced, which, after a common pan-baking process of said dough pieces, form an homogeneous baked product consisting in a bread loaf comprising different types of crumb.

2. Set according to claim 1, characterised in that it comprises three separately premixed improvers.

3. Set according to claim 1 or 2, characterised in that said improvers include all the necessary ingredients to produce a loaf comprising at least a part of white bread and a part of dark bread (or rye-bread) when added to white wheat flour.

4. Set according to any of the preceding claims, characterised in that the flour of an improver is white wheat flour.

5. Set according to any of the preceding claims, characterised in that the individual dough pieces obtained after mixing of each individual improver mainly with flour, water, salt and yeast, after reshaping and before baking, have approximately equal weight.

6. Set according to claim 5, characterised in that the weight of each individual dough piece is comprised between 200 and 400 grams.

7. Set according to any of the preceding claims, characterised in that said set includes a first improver of the following composition (for 50 kg of product):
| ***Ingredients*** | ***Range (grams)*** | |
|---|---|---|
| | ***Min.*** | ***Max.*** |
| Wheat flour | 47 244 | 46 489 |
| Salt | 1 700 | 2 000 |
| Sugar | 800 | 1 000 |
| SSL | 250 | 500 |
| Ascorbic acid | 5 | 8 |
| Alpha-amylases | 1 | 3 |
| ***Total*** | 50 000 | 50 000 |

8. Set according to any of the preceding claims, characterised in that said set includes a second improver of the following composition:
| ***Ingredients*** | ***Range (grams)*** | |
|---|---|---|
| | ***Min.*** | ***Max.*** |
| Plain wheat flour | 45 211 | 42 678 |
| Wheat gluten | 1 750 | 2 500 |
| Salt | 1 700 | 2 000 |
| Sugar | 500 | 800 |
| SSL | 250 | 500 |
| Starch | 200 | 500 |
| Soy oil | 100 | 300 |
| Lactose | 100 | 200 |
| Dextrose | 100 | 200 |
| DATEM | 75 | 300 |
| Ascorbic acid | 8 | 15 |
| Alpha-amylases | 0.5 | 2 |
| Xylanase | 2.5 | 5 |
| ***Total*** | 50 000 | 50 000 |

9. Set according to any of the preceding claims, characterised in that said set includes a third improver of the following composition:
| ***Ingredients*** | ***Ranges (grams)*** | |
|---|---|---|
| | ***Min.*** | ***Max.*** |
| Wheat flour | 16 620 | 4 542 |
| Kibbled soy beans | 6 500 | 8 500 |
| Oatflakes | 5 500 | 7 000 |
| Ryeflour | 4 500 | 7 500 |
| Wheatflakes | 5 500 | 7 000 |
| Barley | 3 000 | 5 500 |
| Wheat gluten | 2 600 | 3 000 |
| Fat in powder | 2 500 | 2 800 |
| Salt | 1 700 | 2 000 |
| Malt flour | 1 200 | 1 400 |
| Soya oil | 100 | 150 |
| Lactose | 100 | 150 |
| Dextrose | 100 | 150 |
| DATEM | 75 | 300 |
| Ascorbic acid | 4 | 8 |
| Alpha-amylases | 0.5 | 2 |
| Xylanase | 2.5 | 5 |
| ***Total*** | 50 000 | 50 000 |

10. Process for producing a baked product comprising the steps of separately mixing the individual improvers of the set according to any of the claims 1 to 9, with an appropriate quantity mainly of flour, water, salt and yeast, in order to get individual dough pieces, subjecting said individual dough pieces to a bulk fermentation, dividing the dough of each type into equal dough pieces of about 200-400 grams, preferably giving the dough pieces an intermediate proof of approximately 10 minutes, reshaping and rounding the pieces of dough in a longitudinal form and positioning these separately and side-by-side in a pan at substantially equal distances from each other and preferably perpendicularly to the pan longitudinal axe and performing a final fermentation in a fermentation cell at approximately 25 - 30°C with 90 - 95% R.H., possibly spreading flour on the top of the loaves and baking finally the fully fermented leaves.

11. Process according to claim 10, characterised in that the individual dough pieces are subjected to an intermediate deep-freezing conservation followed by a defrosting process prior to said reshaping and rounding step.

12. Bread obtained by the process of claim 10 comprising at least two different types of crumb in a single loaf which are positioned adjacent to each other in a non-superimposed manner.
